# EUROPÄISCHE PATENTSCHRIFT

(11) **EP 1 903 519 B1**
(45) Veröffentlichungstag und Bekanntmachung des Hinweises auf die Patenterteilung: **30.06.2010**
(21) Anmeldenummer: 07114644.3
(22) Anmeldetag: 21.08.2007
(51) Int. Cl.: A47J 31/00, G07F 13/00

(54) **Signalisierungseinrichtung für eine verbleibende Tassenzahl**
Signalling device for a remaining mass number
Dispositif de signalisation pour un nombre de tasses restant

(30) Priorität: 19.09.2006 DE 102006043906
(43) Veröffentlichungstag der Anmeldung: 26.03.2008
(73) Patentinhaber: BSH Bosch und Siemens Hausgeräte GmbH, 81739 München (DE)
(72) Erfinder: Daburger, Josef, 83313 Siegsdorf / Hammer (DE); Jaskolka, Robert, 83395 Freilassing (DE); Mathes, Anton, 83364 Neukirchen am Teisenberg (DE); Schneiderbauer, Gottfried, 84553 Halsbach (DE)

(56) Entgegenhaltungen:
- EP-B- 0 915 672
- WO-A-02/076875
- DE-C1- 19 953 376
- JP-A- 9 192 020
- LU-A1- 85 314
- US-A1- 2004 118 298

## Beschreibung

Die Erfindung betrifft eine Brühgetränkemaschine mit einem Wasserbehälter, einem Kaffeebohnenbehälter, einem Tresterbehälter und einem Restwasserbehälter, wobei zumindest einer der Behälter einen Sensor zur Erfassung des Füllstands aufweist, und einer Anzeigeeinrichtung für einen vom Sensor erfassten Füllstand.

Eine Erfassungsvorrichtung für die Benutzungszyklen und/oder der durchsetzten Wassermenge ist aus der DE 19953376 C1 bekannt. Demnach ist in einem Vorratstank einer Brühgetränkemaschine ein Sensor angebracht, der ein mechanisches Zählwerk mit einer Anzeigeeinrichtung ansteuert. Der Sensor ist mit einem Ansteuerhebel, der eine Rastnase aufweist, gekoppelt, die über ein im Trockenbereich der Brühgetränkemaschine angeordnetes Anzeigerad mit Mitnehmerverzahnung um eine entsprechende Anzahl von Rasten weiterstellbar ist. Dadurch werden zum einen die durchgesetzte Wassermenge und zum anderen die Benutzungszyklen ermittelt. Im Betrieb von Brühgetränkemaschinen erweist es sich jedoch als äußerst unangenehm, wenn bei einem größeren Bedarf, also während der Zubereitung mehrerer Tassen, z.B. der Wasservorrat nachgefüllt werden muss. Eine Anzeige einer durchgesetzten Wassermenge oder der Anzahl an Benutzungszyklen ist in einem solchen Fall nicht weiterführend, weil die verbleibende Menge ausgerechnet werden muss und das Ergebnis je nach Einfüllmenge unzuverlässig ist.

Die LU 85314 offenbart eine Brühgetränkemaschine mit einem Wasserbehälter, einem Sensor zur Erfassung des Füllstandes des Wasserbehälters und einer Anzeigeeinrichtung für einen vom Sensor erfassten Füllstand. Auch die WO 02/076875 offenbart einen Getränkespender der sich dadurch auszeichnet, dass die Menge an Getränk, die sich noch im Spender befindet entweder durch Balken oder numerisch in einem numerischen Display als die noch verbleibende Anzahl an Tassen angegeben wird.

Aufgabe der Erfindung ist es daher, eine Einrichtung anzugeben, die die Benutzung einer Brühgetränkemaschine in dieser Hinsicht vereinfacht.

Diese Aufgabe wird erfindungsgemäß bei einer Brühgetränkemaschine der eingangs genannten Art dadurch gelöst, dass aus dem Füllstand eine bis zur Entleerung bzw. Füllung des jeweiligen Behälters verbleibende Tassenzahl angezeigt wird.

Bei einem größeren Bedarf an Getränken kann der Benutzer also schon vor der Zubereitung feststellen, ob die gewünschte Getränkemenge mit dem beispielsweise noch vorhandenen Wasser zubereitet werden kann. Er kann die Brühgetränkemaschine insbesondere vor dem Auftreten eines größeren Bedarfs so weit herrichten, dass die Zubereitung von Getränken in Stoßzeiten nicht durch das Nachfüllen von Wasser unterbrochen werden muss, sofern die Kapazität des Wasserbehälters für die angeforderte Menge ausreicht.

Brühgetränkemaschinen verfügen in der Regel über weitere Behälter, die für einen ordnungsgemäßen Betrieb der Maschinen beschickt werden müssen. Kaffeevollautomaten zumindest enthalten einen Kaffeebohnen- und/oder Kaffeemehlbehälter, einen Tresterbehälter und einen zumeist getrennt davon angeordneten Restwasserbehälter.

Erfindungsgemäß weist wenigstens einer dieser Behälter ebenfalls einen Füllstandsensor auf, der den Füllstand des Behälters erfasst. Der Füllstand des jeweiligen Behälters wird erfindungsgemäß als eine bis zu einer vollständigen Entleerung bzw. Füllung des Behälters verbleibende Tassenzahl angegeben, die in der verbleibenden Zeit bis zur erneuten Beschickung zubereitet werden kann. Damit ist sichergestellt, dass auch das Nachfüllen von Kaffeebohnen oder Kaffeemehl oder das Entleeren des Trester- oder Restwasserbehälters den Betrieb der Brühgetränkemaschine in Stoßzeiten nicht unterbricht, ausreichende Kapazität der Behälter vorausgesetzt.

Nach einer weiteren vorteilhaften Ausgestaltung der Erfindung erfasst der Füllstandssensor den Füllstand des bzw. der Behälter kontinuierlich. Dadurch erhält der Benutzer einen ständigen Überblick über die verbleibende Kapazität der Behälter bzw. der Getränkemaschine. Vor allem, wenn der Benutzer keinen direkten Blick auf die Behälter oder auf eine einfache mechanische Einrichtung zur Angabe deren Füllstands hat, bietet eine stetige Anzeige den gewünschten Überblick.

Nach einer dazu alternativen Ausgestaltungsform der Erfindung sensiert der Füllstandssensor lediglich das Überschreiten bzw. Unterschreiten einer diskreten Füllstandsmarke. Sie kann - gegebenenfalls schon werkseitig - beliebig gewählt und voreingestellt werden und zum Beispiel einer verbleibenden Zubereitungskapazität der Getränkemaschine von fünf Tassen entsprechen. Diese Variante vereinfacht den Aufbau der Getränkemaschine, indem sie den Aufwand für die Füllstandsanzeige verringert. Anstatt ständiger Angabe der verbleibenden Tassenzahlen in Abhängigkeit der einzelnen Behälter kann so auch die Anzeige vereinfacht und übersichtlicher gestaltet werden.

Für Füllstandssensoren sind zahlreiche Konstruktionsmöglichkeiten wie Schwimmer, Reed-, Halt-, Gewichtssensoren o. Ä. bekannt. Nach einer vorteilhaften Ausgestaltung der Erfindung dient als Füllstandssensor eine Lichtschranke. Sie arbeitet berührungslos und erfordert - abgesehen von der Lichtdurchlässigkeit - keine konstruktiven Vorrichtungen an den entnehmbaren Vorrats- oder Reststoffbehältern. Dadurch vereinfacht sich insbesondere die Behälterkonstruktion. Während zum Beispiel Reedsensoren sinnvoll nur bei Flüssigkeitsbehältern eingesetzt werden können, sind Lichtschranken sowohl für Flüssigkeits- als auch für Feststoffbehälter geeignet.

Nach einer weiteren vorteilhaften Ausgestaltung der Erfindung umfasst die Brühgetränkemaschine eine Steuerungseinrichtung, die die Signale zumindest eines Füllstandssensors in eine Information über die verbleibende Tassenzahl umwandelt und über die Anzeige ausgibt. Über die Verarbeitung der Signale der Füllstandssensoren hinaus können in einer Steuerungseinrichtung weitere Informationen verarbeitet werden: Die meisten Kaffeemaschinen bereiten unterschiedliche Getränkemengen zu, je nachdem, ob ein Espresso oder zum Beispiel ein Kaffee gewünscht wird. So kann die Steuerungseinrichtung die Signalisierung der verbleibenden Tassenzahl bei unterschiedlichen Tassengrößen in Abhängigkeit einer durchschnittlichen Tassengröße bewirken. Die durchschnittliche Tassengröße kann wiederum aus den tatsächlichen Benutzungszyklen der Brühgetränkemaschine ermittelt werden. Die Steuerungseinrichtung kann außerdem dafür sorgen, dass nur die jeweils kleinste verbleibende Tassenzahl und der dafür verantwortliche Behälter angezeigt werden. Sie kann weitere Funktionen zur Steigerung der Bequemlichkeit der Bedienung der Brühgetränkemaschine übernehmen, indem sie weitere Angaben macht, zum Beispiel über die abgegebene Tassenzahl seit Beginn eines Betriebszyklus, oder sich individuell auf die Benutzerbedürfnisse programmieren lässt.

Zur vollständigen Erfassung der Füllstände aller Behälter ist also an jedem Behälter ein Sensor anzubringen. Nach einer weiteren vorteilhaften Ausgestaltung der Erfindung kann die Steuereinrichtung den Füllstand des Tresterbehälters und/oder des Restwasserbehälters aus den Betriebsdaten der Brühgetränkemaschine berechnen. Da der Tresterbehälter die verbrauchten Kaffeebohnen bzw. das Kaffeemehl nahezu verlustfrei aufnehmen muss, korreliert sein Füllungsstand mit dem des Kaffeebohnen- bzw. Kaffeemehlbehälters. Daher kann es also genügen, den Füllstand des Kaffeevorratsbehälters zu erfassen und den des Tresterbehälters daraus abzuleiten. Genauso lässt sich die Restwassermenge ermitteln oder ein gemittelter Wert für die Abgabe von Restwasser einstellen, sodass der Füllstand des Restwasserbehälters nicht separat erfasst werden muss. Dadurch reduziert sich die Anzahl der benötigten Füllstandsensoren, was den technischen Aufwand vereinfacht und die Herstellung der Brühgetränkemaschine verbilligt.

Bei Brühgetränkemaschinen wird regelmäßig auch das Erfordernis einer Reinigung und/oder Entkalkung der Brühgetränkemaschine erfasst. Nach einer weiteren vorteilhaften Ausgestaltung der Erfindung kann zusätzlich auch die verbleibende Tassenzahl bis zur erforderlichen Servicetätigkeit für die Reinigung und/oder die Entkalkung der Maschinen angezeigt sein. Damit ist sichergestellt, dass auch diese Servicetätigkeit den Betrieb der Brühgetränkemaschine in Stoßzeiten nicht unterbricht.

Das Prinzip der Erfindung wird im Folgenden anhand einer Zeichnung beispielshalber noch näher erläutert. In der Zeichnung zeigen:
- Figur 1:: einen Wasserbehälter mit einem Reedsensor,
- Figur 2:: einen Kaffeebohnenbehälter mit einer Lichtschranke und
- Figur 3:: ein Anzeigefeld.

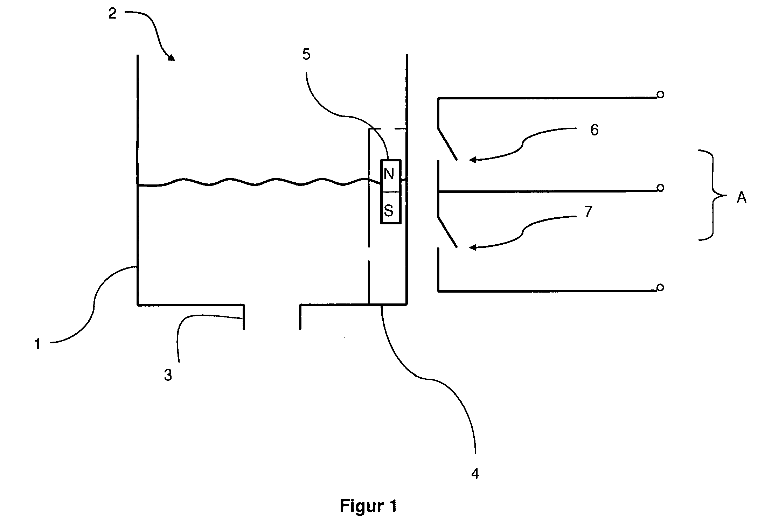

Figur 1 zeigt in einer schematischen Ansicht einen Wasserbehälter 1 eines Kaffeevollautomaten. Er kann, direkt oder vom Kaffeevollautomaten abgenommen, durch die Einfüllöffnung 2 befüllt werden. Bei Bedarf wird Wasser über einen Anschlussstutzen 3 vom Kaffeevollautomaten abgenommen. An einer Innenwand des Wasserbehälters 1 ist ein Steigrohr 4 angeordnet, das als Magnetführung für einen schwimmenden Magneten 5 dient. Der Schwimmermagnet 5 steigt und fällt also im Steigrohr 4 entsprechend dem Wasserstand im Wasserbehälter 1.

Dem Steigrohr 4 sind im Bereich der Außenwand des Wasserbehälters 1 zwei übereinander angeordnete und beabstandete Reedschalter 6 und 7 zugeordnet. Sie werden jeweils geschlossen, sobald sich der Schwimmermagnet 5 auf ihrer Höhe befindet. Sie signalisieren jeweils einen konkreten Wasserstand im Wasserbehälter 1 entsprechend ihrem Abstand A zueinander als Höhendifferenz zwischen zwei entsprechenden Wasserständen.

Der untere Reedsensor 7 ist in einer Position angebracht, in der er das Leerlaufen des Wasserbehälters 1 signalisiert. Mit dem verbleibenden Restwasser kann keine vollständige Tasse mehr gebrüht werden. Hat der Wasserstand im Wasserbehälter 1 dieses Niveau erreicht, so wird zum Beispiel in bekannter Weise durch einen Warnton darauf hingewiesen, dass Wasser nachgefüllt werden muss.

Der obere Reedschalter 6 befindet sich in einer Position deutlich über dem Reedschalter 7 und detektiert einen weit höheren Wasserstand, bei dem noch eine bestimmte Anzahl an Tassen gezapft werden kann. Wird der Reedschalter 6 geschlossen, weil der entsprechende Wasserstand im Wasserbehälter 1 erreicht wurde, so signalisiert er dem Benutzer des Kaffeevollautomaten, dass zum Beispiel noch vier Tassen bezogen werden können. Bevor das Signal des Reedsensors 6 erscheint oder ertönt, kann der Benutzer von einem ununterbrochenen Bezug von mindestens vier Getränken ausgehen. Erhält er dagegen das Signal des Reedsensors 6, so kann er bereits vorbeugend den Wasserbehälter 1 auffüllen, um dann bzw. zu einem späteren Zeitpunkt die gewünschten vier oder mehr Getränke ohne Unterbrechung zubereiten zu können. Die Signalisierung des Reedschalters 6 ermöglicht also dem Benutzer bei Bedarf bzw. in Stoßzeiten einen ununterbrochenen Bezug von Getränken.

Figur 1 zeigt eine Anlage, die über den Reedschalter 6 lediglich einen rechtzeitigen Hinweis auf noch verbleibende vier Getränkebezüge vor einem vollständigen Leerlaufen des Wasserbehälters und das bevorstehende Leerlaufen durch den Reedschalter 7 gibt. Sie stellt die einfachste Konstruktion dar. Werden mehrere Reedschalter 6 übereinander angeordnet, so ist es selbstverständlich auch möglich, mehrere Vorwarnungen mit entsprechender Angabe über eine jeweils verbleibende Tassenzahl anzugeben.

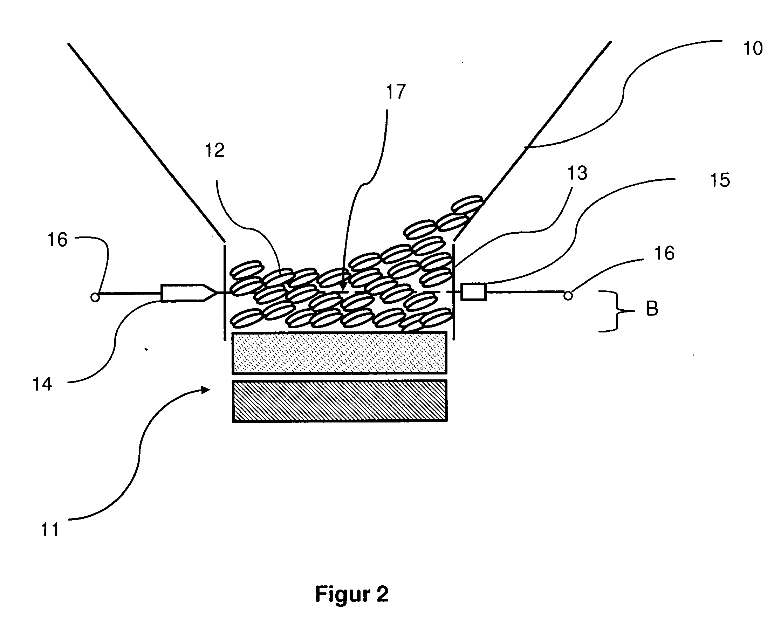

Figur 2 stellt schematisch einen Bohnenbehälter 10 oberhalb eines Mahlwerks 11 eines Kaffeevollautomaten dar. Der Bohnenbehälter 10 ist noch teilweise mit Kaffeebohnen 12 gefüllt. Sie gelangen der Schwerkraft folgend über den Trichtermund 13 in das Mahlwerk 11, sobald dieses in Betrieb genommen wird. An einer Seitenwand des Trichtermunds 13 befindet sich ein optischer Sender 14 und ihm gegenüberliegend ein optischer Empfänger 15 als Lichtschranke. Sie sind beide an eine elektrische Stromquelle 16 angeschlossen. Trifft bei fast leerem - entsprechend einem Abstand B der Lichtschranke über dem Mahlwerk - oder bei ganz leerem Behälter 10 ein Lichtstrahl 17 des Senders 14 auf den Empfänger 15, so gibt dieser ein Signal ab. Eine so signalisierte Restmenge an Kaffeebohnen 12 entspricht einer Anzahl von noch zu beziehenden Getränketassen.

Auch hier können, wie im Falle des Wasserbehälters 1 der Figur 1, mehrere Sender 14 und Empfänger 15 übereinander und korrelierend mit einer bestimmten verbleibenden Tassenzahl am Kaffeebohnenbehälter 10 angeordnet werden. Die Vorrichtung in Figur 2 stellt dementsprechend die einfachste Ausführungsform dar.

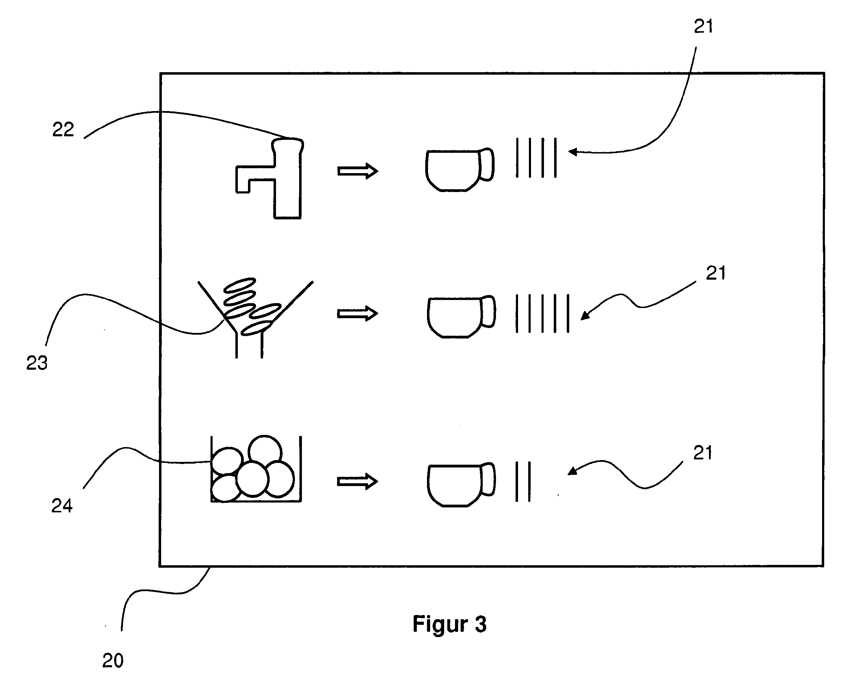

Figur 3 stellt ein Anzeigefeld 20 dar, mit einem Symbol 22 für den Wasservorrat, einem Symbol 23 für den Kaffeebohnenbehälter und einem Symbol 24 für einen Tresterbehälter sowie jeweils mit einer Strichangabe 21 für die darauf bezogene verbleibende Anzahl an beziehbaren Tassen. Das Anzeigefeld 20 gibt also die verbleibenden Tassenzahlen 21 in Abhängigkeit vom Wasserstand, vom Bohnenvorrat im Bohnenbehälter und vom Füllungsgrad des Tresterbehälters an. Gemäß Figur 3 ist demnach aufgrund des Wasservorrats 22 noch der Bezug von vier Tassen, wegen des Füllstands des Kaffeebohnenvorrats 23 von fünf Tassen und aufgrund des Füllstands 24 des Tresterbehälters von zwei Tassen möglich. Zum vereinfachten Erkennen kann die Anzeige 20 nur der geringsten verbleibenden Tassenanzahl genügen

Das Anzeigefeld 20 kann aber als komfortables Beispiel darüber hinaus auch noch die Füllstände der Behälter 22, 23, 24 kontinuierlich angeben. Der Benutzer erhält damit einen vollständigen Überblick über den Füllstand der jeweiligen Behälter 22, 23, 24.

Im dargestellten Fall vermittelt die Anzeige 20 also, dass ohne weitere Servicetätigkeiten jedenfalls nur noch zwei Getränketassen zu beziehen sind. Kennt der Benutzer jedoch bereits im Voraus den anstehenden konkreten Bedarf von vier Getränketassen, so vermittelt ihm die Anzeige 20, dass für deren ununterbrochene Zubereitung der Tresterbehälter geleert werden muss. Besteht der Getränkebedarf jedoch in fünf Tassen, so müssen sowohl der Tresterbehälter 24 entleert als auch der Wasserbehälter 22 aufgefüllt werden. Für noch mehr Getränke müsste schließlich auch noch der Vorrat im Bohnenbehälter 23 ergänzt werden.

Das Anzeigefeld 20 ermöglicht es also dem Benutzer, den Kaffeevollautomaten für Stoßzeiten oder bei einem bekannten zukünftigen Bedarf bis zur Kapazitätsgrenze entsprechend vorzubereiten, sodass im konkreten Bedarfsfall keine Unterbrechung der Zubereitung der Getränke mehr erfolgen muss.

Da es sich bei den vorhergehenden, detailliert beschriebenen Signalisierungseinrichtungen um Ausführungsbeispiele handelt, können sie in üblicher Weise vom Fachmann in einem weiten Umfang modifiziert werden, ohne den Bereich der Erfindung zu verlassen. Insbesondere können die konkreten Ausgestaltungen der Sensoren in anderer Form als in der hier beschriebenen erfolgen. Ebenso kann die Anzeige in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Wasserbehälter
- 2: Einfüllöffnung
- 3: Anschlussstutzen
- 4: Steigrohr
- 5: Schwimmermagnet
- 6: Reedschalter
- 7: Reedschalter

- 10: Bohnenbehälter
- 11: Mahlwerk
- 12: Kaffeebohnen
- 13: Trichtermund
- 14: Sender
- 15: Empfänger
- 16: Stromquelle
- 17: Lichtstrahl

- 20: Anzeigefeld
- 21: Strichangabe
- 22: Symbol für Wasservorrat
- 23: Symbol für Bohnenbehälter
- 24: Symbol für Tresterbehälter

- A: Abstand der Reedschalter 6, 7
- B: Abstand der Lichtschranke 14, 15 über dem Mahlwerk 11

## Patentansprüche

1. Brühgetränkemaschine mit einem Wasserbehälter (1), einem Kaffeebohnenbehälter (10), einem Tresterbehälter und einem Restwasserbehälter, wobei zumindest zwei der Behälter (10) einen Sensor (5, 6) zur Erfassung des Füllstands aufweisen, und einer Anzeigeeinrichtung (20) für einen vom Sensor (5, 6) erfassten Füllstand, **dadurch gekennzeichnet, dass** aus dem Füllstand eine bis zur Entleerung bzw. Füllung des ieweiligen Behälters (10) verbleibende Tassenzahl (21) angezeigt wird.

2. Brühgetränkemaschine nach Anspruch 1, **dadurch gekennzeichnet, dass** der Füllstandsensor den Füllstand kontinuierlich erfasst.

3. Brühgetränkemaschine nach Anspruch 1, **dadurch gekennzeichnet, dass** der Füllstandsensor (5, 6; 14, 15) das Überschreiten einer diskreten Füllstandsmarke sensiert.

4. Brühgetränkemaschine nach Anspruch 3, **gekennzeichnet durch** eine Lichtschranke (14, 15) als Füllstandsensor.

5. Brühgetränkemaschine nach einem der obigen Ansprüche, **gekennzeichnet durch** eine Steuerungseinrichtung, die Signale zumindest eines Füllstandsensors (5, 6; 14, 15) in eine Information über die verbleibende Tassenzahl (21) umwandelt und über die Anzeige (20) darstellt.

6. Brühgetränkemaschine nach Anspruch 5, **dadurch gekennzeichnet, dass** die Steuerungseinrichtung den Füllstand des Tresterbehälters und/oder des Restwasserbehälters aus Betriebsdaten der Brühgetränkemaschine berechnet.

7. Brühgetränkemaschine nach einem der obigen Ansprüche, **dadurch gekennzeichnet, dass** die verbleibende Tassenzahl bis zur erforderlichen Servicetätigkeit für Reinigung und/oder Entkalkung angezeigt wird.

## Claims

1. Hot drinks machine with a water container (1), a coffee beans container (10), a residues container and a residual water container, wherein at least two of the containers (10) have a sensor (5, 6) for detecting the filling state, and a display device (20) for a filling state detected by the sensor (5, 6), **characterised in that** from the filling state a cup number (21) remaining until emptying or filling of the respective container (10) is indicated.

2. Hot drinks machine according to claim 1, **characterised in that** the filling state sensor continuously detects the filling state.

3. Hot drinks machine according to claim 1, **characterised in that** the filling state sensor (5, 6; 14, 15) senses the exceeding of a discrete filling state mark.

4. Hot drinks machine according to claim 3, **characterised by** a light barrier (14, 15) as filling state sensor.

5. Hot drinks machine according to any one of the preceding claims, **characterised by** a control device which converts the signals of at least one filling state sensor (5, 6; 14, 15) into an item of information about the remaining cup number (21) and illustrates it by way of the display (20).

6. Hot drinks machine according to claim 5, **characterised in that** the control device calculates the filling state of the residues container and/or of the residual water container from operating data of the hot drinks machine.

7. Hot drinks machine according to any one of the preceding claims, **characterised in that** the remaining cup number until a required service action for cleaning and/or decalcification is displayed.

## Revendications

1. Distributeur de boissons infusées, comprenant un récipient d'eau (1), un récipient de café en grains (10), un récipient à marc et un récipient d'eau résiduelle, au moins deux des récipients (10) étant pourvus d'un capteur (5, 6) pour détecter le niveau de remplissage, et un dispositif d'affichage (20) pour un niveau de remplissage détecté par le capteur (5, 6), **caractérisé en ce qu'**un nombre de tasses restant (21) jusqu'à la vidange resp. jusqu'au remplissage du récipient respectif (10) est indiqué à partir du niveau de remplissage.

2. Distributeur de boissons infusées selon la revendication 1, **caractérisé en ce que** le capteur de niveau de remplissage saisit le niveau de remplissage de manière continue.

3. Distributeur de boissons infusées selon la revendication 1, **caractérisé en ce que** le capteur de niveau de remplissage (5, 6; 14, 15) détecte le dépassement d'un repère de niveau de remplissage discret.

4. Distributeur de boissons infusées selon la revendication 3, **caractérisé par** un barrage photoélectrique (14, 15) en tant que capteur de niveau de remplissage.

5. Distributeur de boissons infusées selon l'une des revendications précédentes, **caractérisé par** un dispositif de commande qui convertit les signaux d'au moins un capteur de niveau de remplissage (5, 6; 14, 15) en une information sur le nombre de tasses restant (21) et représente cette information par le biais de l'affichage (20).

6. Distributeur de boissons infusées selon la revendication 5, **caractérisé en ce que** le dispositif de commande calcule le niveau de remplissage du récipient à marc et/ou du récipient d'eau résiduelle à partir des données de fonctionnement du distributeur de boissons infusées.

7. Distributeur de boissons infusées selon l'une des revendications précédentes, **caractérisé en ce que** le nombre de tasses restant est indiqué jusqu'à la maintenance nécessaire pour le nettoyage et/ou le détartrage.
